# EUROPÄISCHE PATENTANMELDUNG

(11) **EP 3 121 475 A1**
(43) Veröffentlichungstag der Anmeldung: **25.01.2017**
(21) Anmeldenummer: 16171867.1
(22) Anmeldetag: 30.05.2016
(51) Int. Cl.: F16D 13/75, F16D 23/12, F16H 21/16

(54) **BETÄTIGUNGSEINHEIT SOWIE KRAFTFAHRZEUG**

(30) Priorität: 03.07.2015 DE 102015212528
(71) Anmelder: ZF Friedrichshafen AG, 88046 Friedrichshafen (DE)
(72) Erfinder: Mäder, Fred, 97532 Üchtelhausen (DE); Baumgart, Sebastian, 97705 Burkardroth (DE)

(57) **Zusammenfassung**

Die Erfindung betrifft eine Betätigungseinheit für eine Kupplung umfassend eine Antriebseinheit, ein Betätigungselement zum Betätigen der Kupplung und ein Getriebe zum Übersetzen eines durch die Antriebseinheit erzeugten Drehmomentes auf das Betätigungselement, wobei das Betätigungselement mit einem Vorspannelement in Richtung Ausrücken zumindest zeitweise vorspannbar ist, dadurch gekennzeichnet, dass das Vorspannelement auf einer Seite am Getriebe abgestützt ist.

Daneben betrifft die Erfindung ein Kraftfahrzeug.

## Beschreibung

Die Erfindung betrifft eine Betätigungseinheit für eine Kupplung umfassend eine Antriebseinheit, ein Betätigungselement zum Betätigen der Kupplung und ein Getriebe zum Übertragen eines durch die Antriebseinheit erzeugten Drehmomentes auf das Betätigungselement, wobei das Betätigungselement mit einem Vorspannelement in Richtung Ausrücken zumindest zeitweise vorspannbar ist.

Es ist bekannt, das Betätigungselement eines Kupplungsaktuators dahingehend vorzuspannen, dass er mit einer vorgebbaren Kraft an einem Ausrücklager anliegt. Dadurch kann erreicht werden, dass die Lebensdauer des Ausrücklagers verlängert ist.

Dabei stützt sich bei bekannten Kupplungsaktuatoren eine Schraubenfeder am Gehäuse ab, während sie mit der anderen Seiten einen Stößel als Betätigungselement mit einer Vorspannkraft beaufschlagt. Wird der Stößel mit dem Getriebe in Richtung Ausrücken verschoben, so verliert die Schraubenfeder bei immer größer werdender Ausdehnung irgendwann den Kontakt zum Stößel, zumindest beaufschlagt sie ihn nicht mehr mit einer Vorspannkraft, da die Stößelbewegung von der Federbewegung abgekoppelt ist. Dementsprechend spannt die Schraubenfeder das Betätigungselement bzw. den Stößel nur zeitweise vor, nämlich dann wenn der Kupplungsaktuator in die Einrückposition verfahren ist sowie eine kurze Wegstrecke in Richtung Ausrücken.

Ausgehend hiervon ist es Aufgabe der vorliegenden Anmeldung, eine Betätigungseinheit für eine Kupplung anzugeben, bei der der Aufbau des Vorspannelementes vereinfacht werden kann.

Zur Lösung dieser Aufgabe wird eine Betätigungseinheit mit den Merkmalen von Anspruch 1 vorgeschlagen. Weiterführende Ausgestaltungen ergeben sich aus den Unteransprüchen.

Als Kern der Erfindung wird angesehen, dass das Vorspannelement nicht mehr direkt am Gehäuse abgestützt ist sondern am Getriebe. Das Getriebe selbst ist wiederum am Gehäuse abgestützt, jedoch findet diese Abstützung des Vorspannelementes am Gehäuse nur noch indirekt statt. Der eigentliche Stützpunkt befindet sich am Getriebe.

Das Getriebe besteht aus einer Vielzahl an Bauteilen. Grundsätzlich kann das Vorspannelement an jedem Getriebeteil abgestützt werden.

Vorzugsweise ist das Vorspannelement als Drehfeder ausgebildet. Das Abstützen einer Drehfeder ist dabei anders auszugestalten als das Abstützen einer Schraubenfeder, deren eine Seite eine Auflagefläche benötigt. Bei einer Drehfeder ist ein Federende in einer Bewegungsrichtung einzuschränken oder ganz zu fixieren. D.h., dass die Stützstelle einer Drehfeder beispielsweise als Ausnehmung ausgestaltet sein kann, in die ein Ende der Drehfeder eingreift. Es kann sich aber auch um eine Fläche handeln, gegen die ein Ende der Drehfeder andrückt.

Bevorzugt ist das erste Ende des Vorspannelementes an einem eingangsseitigen Getriebeteil abgestützt. Hierbei kann es sich beispielweise um ein Zahnradsegment handeln. Dieses wird in vielen Ausgestaltungen durch die Getriebeeingangswelle angetrieben und befindet sich dementsprechend auf der Antriebsseite oder Eingangsseite des Getriebes.

Neben dem Abstützen eines Endes des Vorspannelementes ist auch seine Lagerung vorzunehmen.

Dabei wird in der vorliegenden Anmeldung unter Abstützen derjenige Teil der Betätigungseinheit angesprochen, der dafür sorgt, dass die Feder in einen Spannungszustand gerät oder gehalten wird. Bei der Lagerung ist derjenige Teil der Betätigungseinheit gemeint, der das Vorspannelement in seiner Lage hält, unabhängig davon, ob es gerade angespannt ist oder nicht. Dabei ist bevorzugt vorgesehen, dass das Vorspannelement an einem Lagerelement am Getriebe gelagert ist. Das Lagerelement ist mit anderen Worten der Teil der Betätigungseinheit, auf den die mittleren Bereiche des Vorspannelementes aufliegen, hängen oder sonst wie gelagert sind.

Dabei kann das Vorspannelement bevorzugt auf einer zylindrischen Rolle gelagert sein. Dies ist nicht nur bei Drehfedern möglich, sondern auch bei Schraubenfedern. Das Lagerelement bzw. die zylindrische Rolle erlauben es, dass das Vorspannelement auch dann gelagert ist, wenn die Enden nicht oder nur mit einer geringen Kraft abgestützt werden.

Vorteilhafterweise kann am Getriebeausgang ein Kurvengetriebe angeordnet sein und das Vorspannelement an einem mit dem Kurvengetriebe fest verbundenen Lagerelement gelagert sein. Hierbei handelt es sich um eine besonders bevorzugte Art der Lagerung des Vorspannelementes.

Vorzugsweise kann das Lagerelement des Vorspannelementes drehbar am Getriebe befestigt sein. Dies ermöglicht eine Relativdrehung des Vorspannelementes zum Getriebe, was insbesondere bei Drehfedern eine vorteilhafte Art der Lagerung darstellt. Dabei ist es allerdings nicht zwingend, dass das Lagerelement drehbar am Getriebe befestigt ist, vielmehr könnte das Lagerelement auch drehfest am Getriebe fixiert sein. Dementsprechend ist es lediglich bevorzugt, die Drehbarkeit vorzusehen.

Besonders bevorzugt ist das Lagerelement des Vorspannelementes dabei am bereits erwähnten Zahnradsegment befestigt. Dann befinden sich die Lagerung und die Abstützung der ersten Seite des Vorspannelementes am gleichen Getriebeteil.

Vorteilhafterweise kann das Lagerelement als Hülse ausgebildet sein.

Bevorzugt kann das Vorspannelement auf der zweiten Seite zumindest zeitweise am Getriebe abgestützt sein. D.h, dass die Vorspannung nicht mehr dadurch realisiert wird, dass der Stößel am Gehäuse vorgespannt ist, sondern dass die Vorspannung alleine im Getriebe ausgestaltet wird. Dadurch ergeben sich Freiheiten in der Ausgestaltung des Getriebegehäuses wie auch des Betätigungselementes.

Bevorzugt kann das Vorspannelement am Getriebeausgang abgestützt sein. Insbesondere kann das Vorspannelement am Kurvengetriebe oder am drehbar gelagerten Lagerelement abgestützt sein. Dann muss das drehbar gelagerte Lagerelement auch drehfest mit dem Getriebeausgang verbunden sein. D.h., dass die Abstützung des Vorspannelementes am Getriebeausgang direkt oder indirekt erfolgen kann. Besonders bevorzugt ist das Vorspannelement an einem Kurvengetriebe am Getriebeausgang abgestützt.

Vorteilhafterweise kann das Getriebe einen Anschlag aufweisen, gegen den die zweite Seite bzw. das zweite Ende des Vorspannelementes bei Bewegung des Getriebes in Richtung Ausrücken läuft, sodass das Vorspannelement nicht mehr auf die Abstützstelle der zweiten Seite am Getriebe wirkt. Läuft bei Bewegung des Getriebes eine Drehfeder beispielsweise gegen einen Anschlag, wird sie entspannt. Ab einem gewissen Drehwinkel und damit Entspannungsgrad übt die Drehfeder dann keine Vorspannkraft mehr auf den Getriebeausgang, beispielsweise das Kurvengetriebe, aus und damit nicht mehr auf das Betätigungselement.

Besonders bevorzugt weist das Getriebe einen Verschleißausgleichmechanismus auf. Dieser dient zum Ausgleichen von Verschleiß von Kupplungsbauteilen, insbesondere der Kupplungsscheibe. Dabei kann das Vorspannelement besonders bevorzugt so angeordnet sein, dass bei zunehmendem Verschleiß die Vorspannkraft des Vorspannelementes erhöht ist. Beispielsweise kann der Verschleißausgleichmechanismus die Relativstellung zweier Getriebeteile gegeneinander verstellen, sodass mit zunehmendem Verschleiß die Relativdrehung immer weiter anwächst. Insbesondere kann der Verschleißausgleichmechanismus die Relativdrehung des Zahnradsegments und des Kurvengetriebes gegeneinander verstellen, weswegen bei Abstützung des Vorspannelementes an diesen beiden Getriebeteilen dann die Vorspannkraft bei zunehmendem Verschleiß variiert wird. Insbesondere kann das Vorspannelement an demjenigen Getriebeeingangsteil und demjenigen Getriebeausgangsteil abgestützt sein, deren Relativpositionen durch den Verschleißausgleichmechanismus gegeneinander verändert werden.

Wie beschrieben kann die Vorspannkraft des Vorspannelementes von einem Verschleißausgleichsmechanismus abhängen. Ein bevorzugtes Getriebe mit Verschleißausgleichsmechanismus stellt sich dabei wie folgt dar:
Bevorzugt kann durch den Verschleißausgleichsmechanismus die Einrückposition des Betätigungselementes an den Verschleißzustand der Kupplung anpassbar sein, indem sich der Hebelarm zwischen Getriebe und Betätigungselement mit Wechsel der Einrückposition aufgrund einer Verschleißausgleichsanpassung vergrößert. Dies kann dadurch vollzogen werden, dass sich auf der Abtriebsseite des Getriebes ein Kurvengetriebe befindet.

Vorteilhafterweise kann der Abstand zwischen der Drehachse des Getriebes oder eines Verbindungselementes des Getriebes und der Längsachse des Betätigungselementes während der Drehbewegung des Getriebes im Wesentlichen konstant gehalten werden. Dadurch wird das Betätigungselement vollkommen linear bewegt, wodurch das Gehäuse im der Kupplung zugwandten Abschnitt kompakter gebaut werden kann, da der Stößel bzw. das Betätigungselement keine Auf- und Abbewegung mehr durchführt. Dadurch, dass das Betätigungselement eine Linearbewegung durchführt, ist weiterhin die Reibung zwischen dem Betätigungselement und der Kupplung bzw. dem Ausrücklager, an dem das Betätigungselement angreift, verringert. Das Verbindungselement ist ein Teil des Getriebes und zwar derjenige, der mit dem Betätigungselement in Eingriff steht.

Vorzugsweise das Getriebe das Betätigungselement an einer Angriffsposition angreifen, wobei die Angriffsposition während der Drehbewegung des Getriebes veränderbar ist. Bei bekannten Betätigungseinheiten nimmt eine am als Verbindungselement verwendeten Schneckenrad befestigte Gelenkpfanne den Stößel auf. Die Angriffsposition des Verbindungselementes ist damit der Gelenkkopf des Stößels, der sich zwar in der Gelenkpfanne während der Drehbewegung des Schneckenrades dreht, die Gelenkpfanne aber nicht verlässt. Im Gegensatz dazu ist in Weiterbildung der Erfindung vorgesehen, dass die Angriffsposition des Verbindungselementes am Betätigungselement während der Drehbewegung des Verbindungselementes verändert wird. Dies bedeutet, dass das am Betätigungselement angreifende Teil des Verbindungselementes seine Relativposition zum Betätigungselement verändert.

Das Getriebe weist wie beschrieben einen Verschleißausgleichmechanismus auf, durch den die Grundposition des Betätigungselementes an den Verschleißzustand der Kupplung anpassbar ist. Die beschriebenen Vorteile betreffend die Linearbewegung des Betätigungselementes sind unabhängig vom Vorhandensein eines Verschleißausgleichmechanismus. Dieser sorgt jedoch dafür, dass die Grund- bzw. Ausgangsposition des Betätigungselementes an den Verschleißzustand der Kupplung angepasst wird. Bei Verschleiß der Kupplungsscheibe verlagern sich die Membranfederzungen der Kupplung im eingerückten Zustand nach außen, das heißt von der Kupplungsscheibe weg. Die Grundposition des Betätigungselementes, das ist dementsprechend die Position, in der das Betätigungselement im eingerückten Zustand über einen Ausrückhebel oder eine Ausrückgabel am Ausrücklager der Kupplung angreift, muss also derart angepasst werden, dass sich die Grundposition oder Einrückposition des Betätigungselementes mit zunehmendem Verschleiß von der Kupplungsscheibe entfernt. Hierzu dient ein Verschleißausgleichmechanismus.

Vorteilhafterweise kann das Verbindungselement scheibenförmig ausgebildet sein und auf der Seite des Bedienungselementes wenigstens einen Vorsprung aufweisen. Dadurch wird die Aufgabenverteilung in Bezug auf die wechselseitige Aufnahme vertauscht. Dabei kann der Vorsprung grundsätzlich beliebige Formen annehmen. Beispielsweise kann er quaderförmig ausgebildet sein. Bevorzugt ist jedoch vorgesehen, dass der Vorsprung bolzenförmig ist. Aufgrund der zylindrischen Ausgestaltung weist die Mantelfläche des Vorsprungs keinerlei Kanten oder Ecken auf. Da der Vorsprung im Vergleich zum Betätigungselement auch eine Rotationsbewegung ausführt, kann dadurch der Verschleiß vermindert werden.

Mit Vorteil können zwei Vorsprünge vorgesehen sein, die von der Drehachse des Verbindungselementes gleich beabstandet sind. Die Vorsprünge übertragen dementsprechend das gleiche Drehmoment. Durch die Verwendung zweier Vorsprünge kann der Winkel der Drehbewegung, bei dem das Verbindungselement das Betätigungselement antreibt, vergrößert werden. Insbesondere wird es dadurch möglich, dass das Verbindungselement auch Rotationsbewegungen um mehr als 180° durchführt, was mit einer Gelenkpfanne nicht möglich ist. Deren Bewegung ist per se auf 180° beschränkt, aufgrund praktischer Limitationen sinkt der verwendbare Winkelbereich der Drehbewegung auf deutlich unter 180°. Durch die Verwendung von Vorsprüngen lässt sich dagegen ein beliebiger Drehwinkel realisieren, es sind lediglich genügend Vorsprünge in Umfangsrichtung vorzusehen.

Mit besonderem Vorteil können zwei Vorsprünge vorgesehen sein, die von der Drehachse des Verbindungselementes bzw. des Getriebes unterschiedlich beabstandet sind. Das Verbindungselement als Teil des Getriebes hat zumeist dieselbe Drehachse. Daher kann man sich sowohl auf die Drehachse des Verbindungselementes wie auch die des Getriebes beziehen, ohne dass technisch ein Unterschied entsteht. Bevorzugt ist der beim Ausrücken zuerst angreifende Vorsprung näher an der Drehachse gelagert als der zweite Vorsprung. Bezogen auf die Einrückposition im Neuzustand der Kupplung ist der zuerst angreifende Vorsprung normalerweise der in Drehrichtung kupplungsseitige Vorsprung. Beim Wechsel zum zweiten Vorsprung steigt dabei automatisch der Hebelarm.

Vorteilhafterweise kann das Betätigungselement wenigstens eine Ausnehmung zur zumindest zeitweisen Aufnahme eines Vorsprungs des Verbindungselementes des Getriebes aufweisen. Die Ausnehmung kann das Betätigungselement auf gesamter Breite beaufschlagen, die Ausnehmung kann aber auch wie ein Sackloch ausgebildet sein, das heißt nur in einer Tiefe in das Betätigungselement eindringen, die geringer ist, als die Breite des Betätigungselementes. Dies bedeutet aber nicht, dass die Grundfläche der Ausnehmung kreisförmig sein soll oder sein muss.

Vielmehr ist vorzugsweise vorgesehen, dass die Ausnehmung in Form eines Langlochs ausgebildet ist. Alternativ kann die Ausnehmung in Form eines zu einer Seite offenen Langlochs ausgebildet sein. Diese Ausgestaltung ermöglicht, dass der Vorsprung des Verbindungselementes in der Ausnehmung verschiebbar ist, wodurch eine Relativbewegung des Vorsprungs im Vergleich zum Betätigungselement ermöglicht ist. Diese Ausgestaltung der Verbindung des Verbindungselementes mit dem Betätigungselement ermöglicht auf einfache Art und Weise, dass das Betätigungselement linear bewegt wird. Die Bewegungsanteile senkrecht zur Richtung der Linearbewegung werden dann durch die Verschiebung des Vorsprungs in der Ausnehmung abgefangen.

Alternativ ist es auch möglich, dass die Ausnehmung einen kreisförmigen Querschnitt aufweist und der Vorsprung am Verbindungselement verschiebbar befestigt ist. Dabei ist denkbar, dass der Vorsprung einen Hinterschnitt aufweist, der in einer am Verbindungselement vorhandenen Schiene verschiebbar fixiert ist. Mit der Ausgestaltung der Ausnehmung als Langloch und der dementsprechenden Möglichkeit, den Vorsprung starr am Verbindungselement zu fixieren oder diese auch einstückig auszubilden ist aber aufgrund der Einfachheit in der Herstellung bevorzugt.

Vorteilhafterweise kann die Längsrichtung der Ausnehmung senkrecht zur Längsrichtung des Betätigungselementes angeordnet sein. Aufgrund dieser Ausgestaltung können, wie bereits beschrieben, alle Bewegungen des Vorsprungs senkrecht zur Richtung der Linearbewegung des Betätigungselementes aufgefangen werden, so dass eine Bewegbarkeit des Betätigungselementes, die nicht in der Richtung der Linearbewegung liegt, nicht mehr nötig ist. Dadurch kann wie beschrieben, der Bauraum der Betätigungseinheit dahin gehend verringert werden, dass das Gehäuse im Bereich des Betätigungselementes einen geringeren Durchmesser aufweisen kann. Vorteilhafterweise kann das Betätigungselement eine ringförmige Versteifung aufweisen, die senkrecht zur Drehachse des Verbindungselementes des Getriebes angeordnet ist. Da die Betätigungseinheit eine oder mehr Ausnehmungen aufweist, die insbesondere auch noch länglich ausgebildet sind, kann die Steifigkeit des Betätigungselementes insbesondere bei Druckbeaufschlagung in Mitleidenschaft gezogen werden. Diese Steifigkeit kann durch das Vorsehen der Versteifung wieder erhöht werden. Die Versteifung ist ringförmig, damit die Vorsprünge des Verbindungselementes auch nach Austritt der Vorsprünge aus den Langlöchern bzw. Ausnehmungen frei bewegt werden können.

Vorteilhafterweise ist bei Vorhandensein wenigstens zweier Ausnehmungen die Länge der Ausnehmungen in Abhängigkeit des Winkelabstandes der Vorsprünge des Verbindungselementes festgelegt. Die Festlegung kann derart erfolgen, dass zu jedem Punkt der Drehbewegung des Verbindungselementes immer ein Vorsprung am Betätigungselement angreift. Ansonsten kann es vorkommen, dass die Vorsprünge mit den Ausnehmungen verklemmen.

Vorteilhafterweise kann das Verbindungselement eine zylindrische Form besitzen und eine Schlingfeder mit mehreren Wicklungen um die Außenseite gebunden sein. Die Schlingfeder kann durch einen Anschlag derart festgezogen werden, dass sie das Verbindungselement in Ausrückrichtung beaufschlagt, beim Einrücken am Ende der Drehbewegung aber Spiel lässt, so dass das Verbindungselement im Vergleich zur Antriebseinheit verdreht werden kann, wodurch die Grundposition des Verbindungselementes an einen Verschleiß der Kupplung angepasst wird.

Diesbezüglich ist weiterhin vorteilhaft vorgesehen, dass das Verbindungselement in einem Zahnradsegment gelagert ist, wobei das Zahnradsegment die gleiche Drehachse aufweist, wie das Verbindungselement. Mit der Schlingfeder ist es dabei möglich, die Relativposition des Verbindungselementes zum Zahnradsegment zu verändern, so dass sich das Zahnradsegment und das Verbindungselement nicht fest miteinander drehen müssen bzw. das Zahnradsegment und das Verbindungselement nicht miteinander fixiert sein müssen.

In einer alternativen Ausgestaltung ist es möglich, dass das Verbindungselement selbst als Zahnradsegment ausgestaltet ist. Das heißt, dass sich auf der Außenseite des Verbindungselementes derartige Rillen, bzw. Vertiefungen befinden, dass das Verbindungselement mit einem Schneckentrieb antreibbar ist.

Vorzugsweise kann die Betätigungseinheit eine Kompensationsfedereinheit aufweisen, die am Getriebe und dort bevorzugt am Zahnradsegment oder in der alternativen Ausgestaltung am Verbindungselement angreift. Mit dieser Kompensationfedereinheit, die vorzugsweise eine Federführung, ein Gelenklager und die Kompensationsfeder umfasst, ist es möglich, die Leistung der Antriebseinheit zu minimieren. Die Kompensationsfedereinheit bildet dabei den Gegenpart zur Membranfeder, die abgesehen von geringfügigen Unterschieden, zur Sicherung einer Vorzugsposition mit betragsmäßig gleich großen aber entgegengesetzten Drehmomenten auf das Verbindungselement einwirken. Daher muss der die Antriebseinheit nur noch sehr geringer Drehmomente übertragen, um ein Ausrücken oder Einrücken der Kupplung zu bewirken. Ohne Kompensationsfedereinheit müsste die Antriebseinheit ansonsten das gesamte Drehmoment zum Ausrücken der Kupplung bereitstellen, was aus Kostengründen nachteilig ist.

Das beschriebene Verbindungselement wirkt als Kurvengetriebe auf das Betätigungselement.

Daneben betrifft die Erfindung ein Kraftfahrzeug mit einer Betätigungseinheit. Das Kraftfahrzeug kennzeichnet sich dadurch aus, dass die Betätigungseinheit nach einem der vorangehenden Ansprüche ausgebildet ist.

Weitere Vorteile, Merkmale und Einzelheiten der Erfindung ergeben sich aus der folgenden Beschreibung von Ausführungsbeispielen und Figuren. Dabei zeigen:
Figur 1 ein Betätigungselement als Explosionszeichnung,
Figur 2 ein Zahnradsegment,
Figur 3 einen Mitnehmer,
Figur 4 einen Stößel,
Figur 5 eine Betätigungseinheit in Grundposition,
Figur 6 eine in Betätigungsrichtung bewegte Betätigungseinheit,
Figur 7 eine Betätigungseinheit in Grundposition bei einer verschlissenen Kupplung,
Figur 8 eine in Betätigungsrichtung bewegte Betätigungseinheit bei einer verschlissenen Kupplung,
Figur 9 eine Ausrückkraftkennlinie einer Kupplung,
Figur 10 eine Kennlinie des in den Mitnehmer eingeleiteten Drehmomentes,
Figur 11 eine Kennlinie des Kompensationsmomentes,
Figur 12 eine Kennlinie der Länge des Hebelarmes,
Figur 13 den Mitnehmer in einer zweiten Ausgestaltung,
Figur 14 eine Betätigungseinrichtung in Seitenansicht,
Figur 15 einen Getriebeabschnitt in perspektivischer Ansicht,
Figur 16 eine Betätigungseinrichtung in perspektivischer Ansicht,
Figur 17 eine Bolzenlagerung im Querschnitt, und
Figur 18 ein Getriebe mit Vorspannelement.

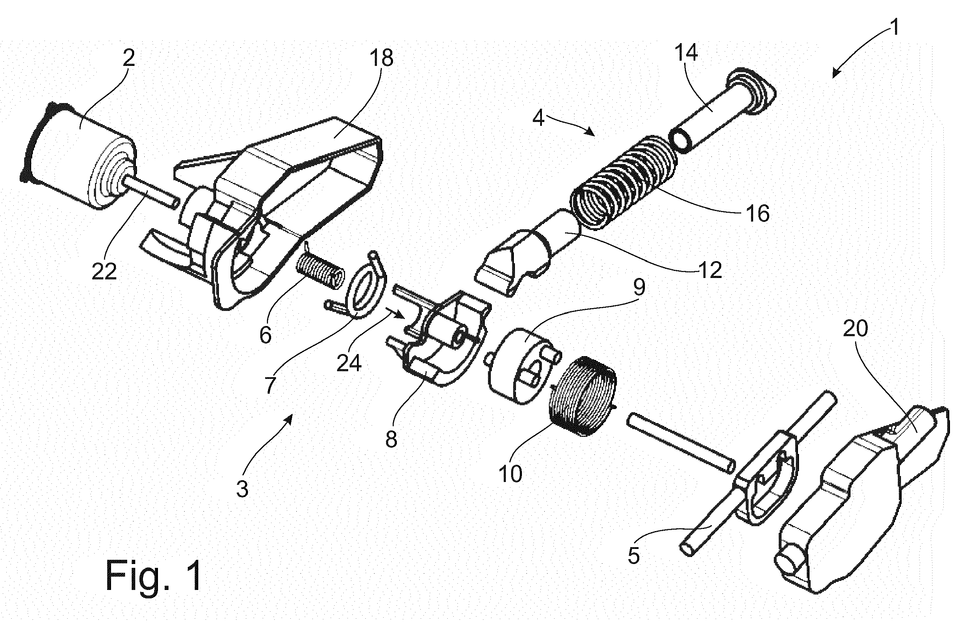

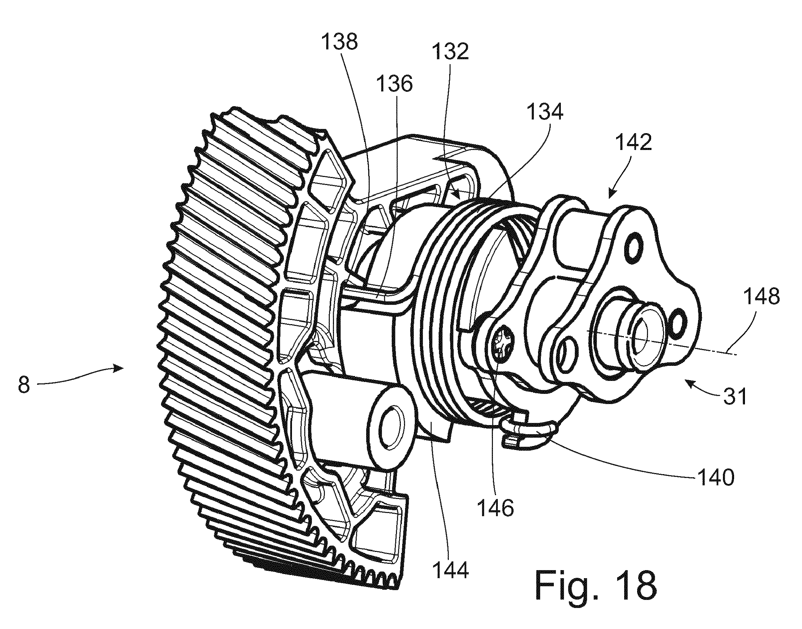

Die Figuren 1 bis 17 zeigen dabei eine Betätigungseinheit und ihre Funktion, wie sie aus der DE 10 2014 215 324 A1 hervorgeht. Der im Folgenden beschriebene Verschleißausgleichsmechanismus ist dabei eine bevorzugte Ausgestaltung eines Verschleißausgleichsmechanismus. Da dieser in der das Vorspannelement darstellenden Figur nicht mehr erkennbar ist wird er separat dargestellt. Die dabei beschriebenen Bauteile befinden sich so auch in der in Figur 18 dargestellten Betätigungseinheit. Insbesondere der Verschleißausgleichmechanismus ist dann aber nicht mehr erkennbar, da er verdeckt ist.

Figur 1 zeigt eine Betätigungseinheit 1 mit einem Elektromotor 2 als Antriebseinheit, einem Getriebe 3, eine Federkompensationseinheit 4 und einem Stößel 5 als Betätigungselement.

Das Getriebe 3 umfasst eine Vorlastfeder 6, eine Anschlagfeder 7, ein Zahnradsegment 8, einen Mitnehmer 9 als Verbindungselement und eine Schlingfeder 10. Die Kompensationsfedereinheit 4 weist ein Gelenklager 12, eine Federführung 14 und eine Kompensationsfeder 16 auf.

Weiterhin weist die Betätigungseinheit 1 ein Gehäuse 18 zur Aufnahme der Bauteile des Getriebes 3 wie auch der Kompensationsfedereinheit 4 sowie des Stößels 5 auf; das Gehäuse 18 ist mit einem Deckel 20 verschlossen. Im Folgenden wird die Funktionsweise der Betätigungseinheit 1 für eine gedrückte Kupplung beschrieben. Die Betätigungseinheit 1 kann jedoch durch Vornahme von Modifikationen auch für eine gezogene Kupplung eingesetzt werden. Die Modifikationen betreffen dabei die Ansteuerung des Elektromotors 2 sowie die Ausgestaltung des Stößels 5. Diese Modifikationen sind grundsätzlich bekannt und bedürfen daher keiner weiteren Erläuterung.

Die Funktionsweise der Betätigungseinheit 1 ist für eine gedrückte Kupplung wie folgt:
Die Grund- oder Ausgangsposition des Stößels 5 ist derart, dass er im eingerückten Zustand der Kupplung an der Kontaktposition zur Ausrückeinheit anliegt. In dieser Position wird der Stößel 5 von der Kompensationsfedereinheit 4 fixiert, da diese so gelagert ist, dass sie das Zahnradsegment in einer Einkuppelposition vorbelastet. Wenn im Folgenden von einer Einkuppel- oder Auskuppelposition die Rede ist, bedeutet dies, dass die Betätigungseinheit 1 so eingestellt ist, dass sich die Kupplung im eingekuppelten oder ausgekuppelten Zustand befindet. Die Einkupplung oder Auskupplung bezieht sich also auf den Zustand der Kupplung und nicht auf die Position der Teile der Betätigungseinheit 1 an sich. Analog werden die Begriffe Einrückund Ausrückposition verwendet.

Zum Auskuppeln erhält der Elektromotor 2 ein Signal, woraufhin dieser um einen vorgegebenen Umfangswinkel verdreht wird. Dabei kämmt die Stirnradverzahnung 22 mit der Außenseite des Zahnradsegmentes 8 und überträgt auf dieses ein Drehmoment. Das Drehmoment, dass der Elektromotor aufbringt, ist ausreichend um die durch die Kompensationsfedereinheit 4 bzw. der Kompensationsfeder 16 aufgebrachte Kraft zu überwinden. Da die Kompensationsfedereinheit 4 bzw. das Gelenklager 12 nahe bei der Drehachse 24 des Zahnradsegments 8 angreift, ist das darauf zu bringende Drehmoment nicht übermäßig groß. Nachdem die Kompensationsfedereinheit 4 bzw. deren Angriffspunkt am Zahnradsegment 8 über die Drehachse 24 gedreht wurde, unterstützt die Kompensationsfedereinheit 4 die Ausrückbewegung. Durch die Drehung des Zahnradsegmentes 8 wird die Schlingfeder 10, deren Enden jeweils an einem Anschlag des Zahnradsegmentes 8 aufliegen, zusammen gezogen und in reibschlüssige Verbindung mit dem Mitnehmer 9 gebracht. Dabei umschlingen die Windungen der Schlingfeder 10 die Außenseite des Mitnehmers 9, wobei zwischen der Außenseite des Mitnehmers 9 und der Innenseite des Zahnradsegmentes 8 ein genügender Abstand verbleibt, so dass in diesem Zwischenraum die Schlingfeder 10 genügend Spiel besitzt, um beim Einkuppeln die Umschlingung wieder lösen zu können, in dem durch Aufweitung des Durchmessers der Reibschluss zum Mitnehmer 9 unterbrochen wird. Durch die richtige Auslegung der Anschläge des Zahnradsegmentes 8 und der Schlingfeder 10 kann so auch ein Verschleißausgleichmechanismus realisiert werden.

Im Folgenden werden das Zahnradsegment 8, der Mitnehmer 9 und die Schlingfeder 10 sowie der Stößel 5 näher beschrieben.

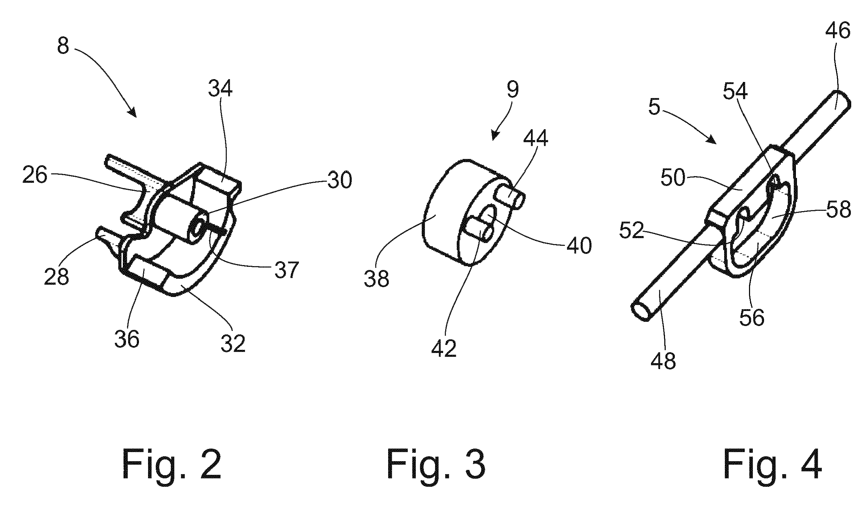

Figur 2 zeigt das Zahnradsegment 8, das elektromotorseitig zwei Anschläge 26 und 28 für die Anschlagfeder 7 besitzt. Stößelseitig befindet sich dagegen ein Lagerbolzen 30 sowie eine segmentierte Ringwandung 32. Der Lagerbolzen 30 ist zylindrisch geformt, so dass der Mitnehmer 9 auf dem Lagerbolzen 30 drehbar gelagert werden kann. Auf der Außenseite weist die Ringwandung 32 eine Stirn-Verzahnung auf, die mit der Stirnradverzahnung 22 des Elektromotors 2 kämmt. Auf der Innenseite ist die Ringwandung 32 glatt ausgebildet. Die seitlichen Enden 34 und 36 der Ringwandung 32 begrenzen diese. Die Schlingfeder 10 sitzt mit einem Ende in einer Nut 37 in der Ringwandung 32, das andere Ende ist grundsätzlich frei drehbar. Die Schlingfeder 10 weist eine Vorspannung gegenüber dem Mitnehmer 9 auf und nimmt diesen mit. Zum Entsperren und Verschleißnachstellen entriegelt das zweite Ende der Schlingfeder 10 in der Grundstellung gegen die Gehäusewandung des Gehäuses 18.

Figur 3 zeigt den Mitnehmer 9, der einen zylindrischen Grundkörper 38 mit einer Ausnehmung 40 aufweist. Bevorzugt durchgreift die Ausnehmung 40 den Grundkörper 38 auf gesamter Länge. Die Ausnehmung 40 legt aufgrund der Lagerung des Mitnehmers 9 am Lagerbolzen 30 die Drehachse des Mitnehmers 9 fest. Stößelseitig besitzt der Mitnehmer 9 zwei Antriebsbolzen 42 und 44. Diese stehen in Eingriff mit entsprechenden Ausnehmungen des Stößels 5, der im Folgenden beschrieben ist.

Der Mitnehmer 9 bildet damit ein Kurvengetriebe 31 in Bezug auf den Stößel 5.

Figur 4 zeigt einen Stößel 5 in einer perspektivischen Ansicht. Dieser hat zwei Lagerabschnitte 46 und 48 sowie einen Mittelabschnitt 50. Die Lagerabschnitte 46 und 48 sind bevorzugt zylindrisch ausgebildet, sie können jedoch aufgrund der ausschließlichen Linearbewegung des Stößels 5 auch eine andere Grundform als die eines Kreises aufweisen. Beispielsweise können die Lagerabschnitte 46 und 48 auch als Quader ausgebildet sein und einen rechteckigen oder quadratischen Querschnitt besitzen. Die Länge der Lagerabschnitte 46 und 48 ist bevorzugt gleich groß, jedoch können die Lagerabschnitte 46 und 48 auch unterschiedliche Längen aufweisen.

Der Mittelabschnitt 50 besitzt zwei u-förmige Ausnehmungen 52 und 54, die in eine darunter liegende großräumige Ausnehmung 56 münden. Dabei ist mit "darunter liegend" lediglich die Abbildung gemäß Figur 4 beschrieben, selbstverständlich kann die Ausnehmung 56 in Abhängigkeit der Einbaulage der Betätigungseinheit 1 auch neben oder über den Ausnehmungen 52 und 54 liegen. Die Ausnehmung 56 wird auf beiden Seiten und der Unterseite durch einen ringförmigen Versteifungsabschnitt 58 begrenzt. Dabei sind die Ausnehmungen 52 und 54 mit besonderem Vorteil zwischen dem Lagerabschnitt 46 und dem Lagerabschnitt 48 angeordnet, so dass der Kraftübertrag vom Mitnehmer 9 auf den Stößel 5 an einer Fläche erfolgt, die in weiterer Verlängerung durch die Lagerabschnitte 46 und 48 abgedeckt ist. Dadurch ist der Kraftübertrag dahingehend verbessert, dass die Kraftübertragung in der gleichen Ebene liegt, wie die Kraftübertragung von Stößel auf den Ausrücker, weshalb Querkräfte vermieden werden und so die Kraftübertragung optimiert ist. Der Versteifungsabschnitt 58 ist ringförmig, um Bewegungsfreiheit für die Antriebsbolzen 42 bzw. 44 zu lassen. Wie in den folgenden Figuren noch gezeigt wird, ist diese Bewegungsfreiheit erforderlich, damit immer nur ein Antriebsbolzen den Stößel 5 antreibt.

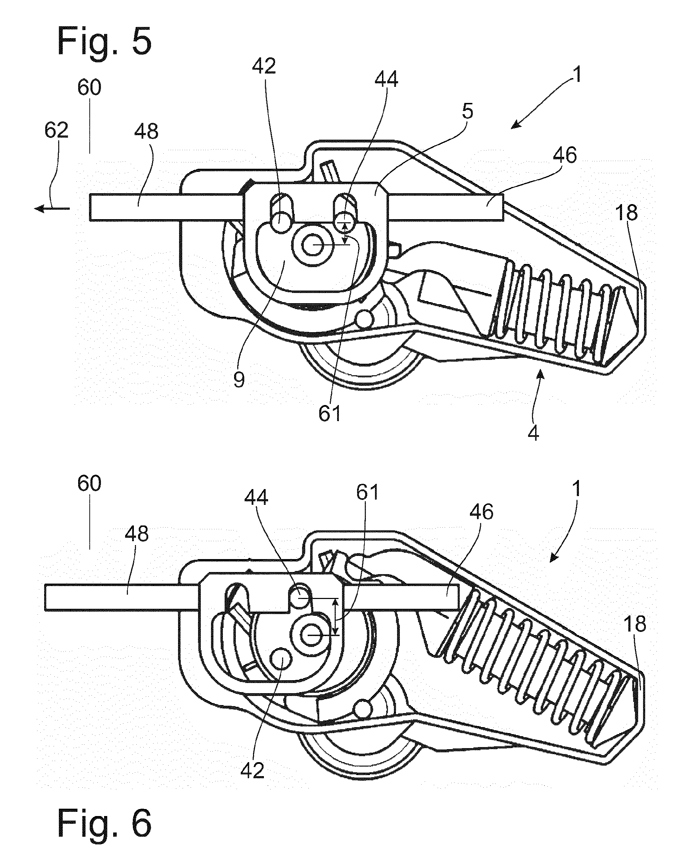

Figur 5 zeigt die Betätigungseinheit 1 in Grundposition, das heißt, dass die Kupplung eingerückt ist. Die Einrück- oder Grundposition für eine Kupplung im Neuzustand wird dabei über die Markierung 60 angezeigt. Der Pfeil 62 gibt die Richtung an, in der der Stößel 5 zu bewegen ist, um die Kupplung auszukuppeln. Der Hebelarm 61 zwischen der Drehachse 63 der Übertragungseinheit 3 bzw. des Mitnehmers 9 und dem Angriffspunkt 65 der Übertragungseinheit 3 am Stößel 5 ist ebenfalls ersichtlich.

Figur 6 zeigt die Betätigungseinheit gemäß Figur 5, wobei der Stößel in Betätigungsrichtung bewegt wurde. Dementsprechend ragt der Lagerabschnitt 48 über die Markierung 60 hinaus, während das Ende des Lagerabschnitts 46 innerhalb des Gehäuses 18 liegt und nicht mehr teilweise außerhalb. Durch weiteren Vergleich der Figuren 5 und 6 kann man erkennen, dass im Neuzustand der Kupplung, auf den ebenfalls Figur 6 bezogen ist, im Wesentlichen der Antriebsbolzen 44 den Stößel 5 antreibt. Der Antriebsbolzen 42 bewegt sich dagegen frei in der Ausnehmung 58. Diese Endposition kann auch als Ausrückposition oder Betriebsposition bezeichnet werden. Um von dieser Betriebsposition wieder in die Grundposition zurück zu gelangen, wird der Elektromotor 2 in Gegenrichtung bewegt. Die Kupplung übt sowieso einen Druck entgegen der Betätigungsrichtung 62 aus, gegen diese Kraft arbeitet und damit in Betätigungsrichtung die Kompensationsfeder 16. Der Elektromotor 2 muss daher nur ein geringes Drehmoment aufbieten, um die Betätigungseinheit 1 von der Betätigungsposition in die Grundposition zurückzuführen. Dabei hat sich der Hebelarm 61 vergrößert, was aber unabhängig von einem Verschleißausgleich geschah, weshalb sich der Hebelarm 61 in der Einrückposition, wie sie in Figur 5 zu sehen ist, nicht ändert.

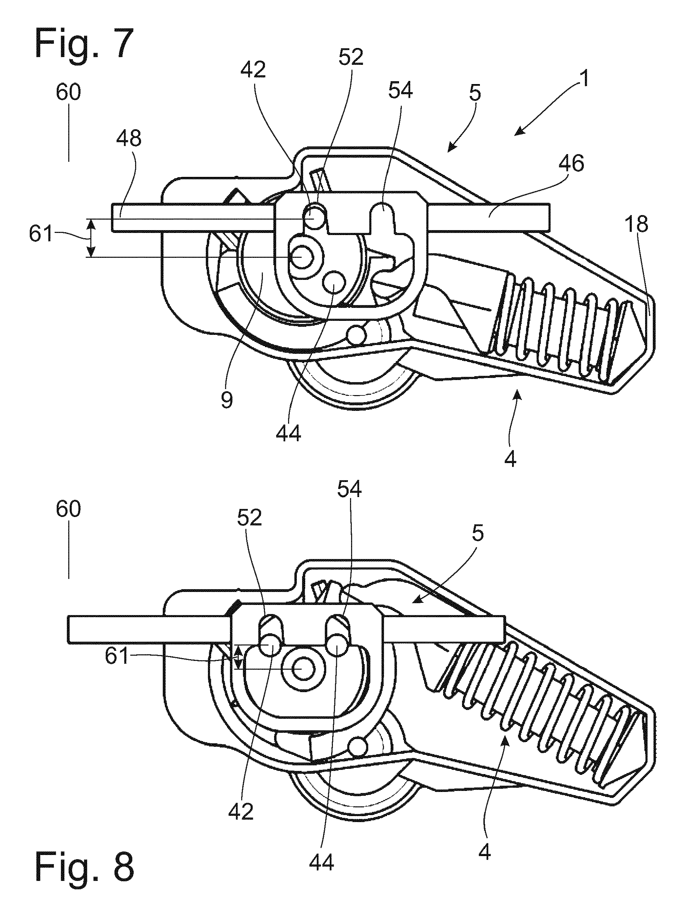

Figur 7 zeigt eine Betätigungseinheit 1 in Grundposition bzw. Einrückposition für eine Kupplung mit Verschleiß. Wie bereits beschrieben, führt der Verschleiß der Kupplungsscheibe dazu, dass in der Einrückposition die Membranfederzungen weiter nach außen gestellt werden. Dementsprechend muss der Angriffspunkt der Betätigungseinheit 1 weiter von der Kupplungsscheibe entfernt liegen, was sich dadurch zeigt, dass der Stößel 5 in der Einrückposition bei Verschleiß weiter in das Gehäuse 18 gerückt ist. Dementsprechend erreicht der Lagerabschnitt 48 die Markierung 60 nicht. Dieser Wechsel der Einrückposition geht mit einer Verdrehung der Ausgangsposition und des Mitnehmers 9 einher. Dadurch ist zu Beginn der Ausrückbewegung nunmehr der Antriebsbolzen 42 mit dem Stößel 5 bzw. der Ausnehmung 52 in Eingriff. Durch Verdrehen des Mitnehmers 9 entgegen dem Uhrzeigersinn wird der Stößel in Betätigungsrichtung 62 verschoben. Erst der Wechsel der Einrückposition des Mitnehmers 9 verändert den Hebelarm 61 in der Einrückposition. Der Hebelarm 61 in der Einrückposition ist mit zunehmendem Verschleiß größer geworden.

Figur 8 zeigt die Betätigungseinheit 1 gemäß Figur 7 in Betätigungsposition. Der Lagerabschnitt 48 erreicht dabei gerade noch die Markierung 60 und entspricht damit der in Figur 5 als Grundposition gezeigten Position des Stößels 5. Jedoch ist im Unterschied zu Figur 5 die Kompensationsfedereinheit 4 ausgefahren.

Die Anordnung der Antriebsbolzen 42 und 44 gemäß Grundposition und Betriebsposition ist dabei relativ willkürlich, wesentlich ist lediglich, dass entweder der Antriebsbolzen 42 oder der Antriebsbolzen 44 mit einer der Ausnehmungen in Verbindung steht. Eine Ausnahme gibt es lediglich für die in den Figuren 5 und 8 gezeigte Position, bei der der Antriebsbolzen 42 gerade noch und der Antriebsbolzen 44 gerade erst mit der jeweiligen Ausnehmung 52 bzw. 54 in Eingriff steht. Stünden die beiden Antriebsbolzen 42 und 44 aber längere Zeit gleichzeitig mit dem Stößel 5 in Wirkverbindung, so würde sich der Mitnehmer 9 über die Antriebsbolzen 42 und 44 mit dem Stößel 5 verkeilen. Das heißt, dass nur bei Übergabe der Antriebsleistung von einem Antriebsbolzen auf den nächsten ein gleichzeitiger Angriff von zwei Antriebsbolzen vorhanden ist.

Die Figuren 5 bis 8 zeigen eine bevorzugte Ausgestaltung mit zwei Antriebsbolzen 42 und 44 und zwei Ausnehmungen 52 und 54. Es ist jedoch möglich, die Anzahl der Antriebsbolzen und damit den Verdrehwinkel des Mitnehmers zu erhöhen. Die Anzahl der Antriebsbolzen hängt dabei vom Durchmesser des Mitnehmers 9 ab. Je kleiner dessen Durchmesser ist, desto mehr Antriebsbolzen werden benötigt. Des Weiteren hängt die Anzahl der zu verwendenden Antriebsbolzen davon ab, wie groß der Ausrückweg ist. Je länger der Ausrückweg ist, desto mehr Antriebsbolzen werden benötigt.

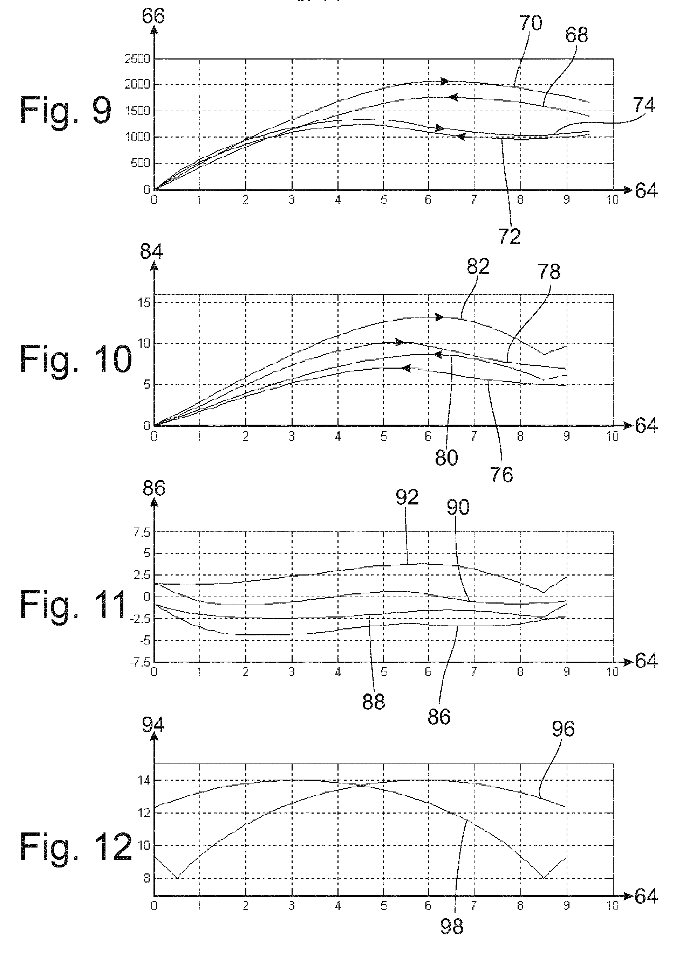

Die Figuren 9 bis 12 zeigen Kompensationskennlinien der Betätigungseinheit 1.

Figur 9 zeigt die Ausrückkraft am Ausrücklager, wobei auf der Achse 64 der Ausrückweg am Ausrücklager in Millimetern und entlang der Achse 66 die Ausrückkraft in Newton angegeben ist. Die Linien 68 und 70 beziehen sich dabei auf eine Kupplung im Neuzustand und die Linien 72 und 74 auf eine Kupplung mit verschlissener Kupplungsscheibe.

Figur 10 zeigt die entsprechenden Linien 80 und 82 für eine verschlissene und die Linien 76 und 78 für eine neue Kupplung. Dabei ist auf der Achse 84 das eingeleitete Drehmoment aufgezeichnet. Wie man erkennt, sind bei einer neuen Kupplung die Kräfte sowohl in Ausrück- als auch in Einrückrichtung niedriger als bei einer verschlissenen Kupplung.

Bei Figur 11 ist auf der Achse 86 das Kompensationsmoment in Newtonmetern gegen den Ausrückweg auf Achse 64 aufgetragen. Die Linien 86 und 90 zeigen dabei das Kompensationsmoment für eine neue und die Linien 88 und 92 das Kompensationsmoment für eine verschlissene Kupplung.

Der Wechsel des Hebelarms 61 ist in Figur 12 gezeigt. Auf der Achse 94 ist dabei die Hebelarmlänge in mm aufgetragen, wobei die Achse 94 nicht bei 0 beginnt. Die Linie 96 zeigt dabei die Hebelarmlänge für eine neue Kupplung und die Linie 98 die Hebelarmlänge für eine verschlissene Kupplung. Man kann erkennen, dass die Hebelarmlänge bei kleinen Ausrückwegen kleiner ist als bei einer verschlissenen Kupplung und dementsprechend zu Beginn der Ausrückbewegung wenig Kraft übertragen wird. Demgegenüber ist der Kraftübertrag bei größeren Ausrückwegen größer als bei einer verschlissenen Kupplung.

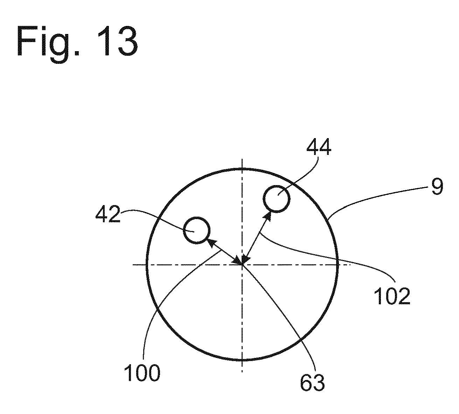

Figur 13 zeigt eine alternative Anordnung des Mitnehmers 9. Bei diesem sind die Abstände 100 und 102 der Antriebsbolzen 42 und 44 von der Drehachse 63 unterschiedlich. Dadurch ist der mit dem Antriebsbolzen 42 erzeugbare Hebelarm weiter von der Drehstellung des Mitnehmers 9 zum Stößel 5 abhängig, der maximale Hebelarm ist aber kleiner als der mit dem Antriebsbolzen 44 maximale erzeugbare Hebelarm.

Durch die beschriebene Betätigungseinheit 1 wird der Abstand der Ausrückkraftkennlinien zwischen neuem und verschlissenem Zustand der Kupplung und damit die Spreizung des Kompensationsmomentes verringert. Somit wird die Belastung des Elektromotors sowohl im Neuzustand wie auch im verschlissenen Zustand verringert.

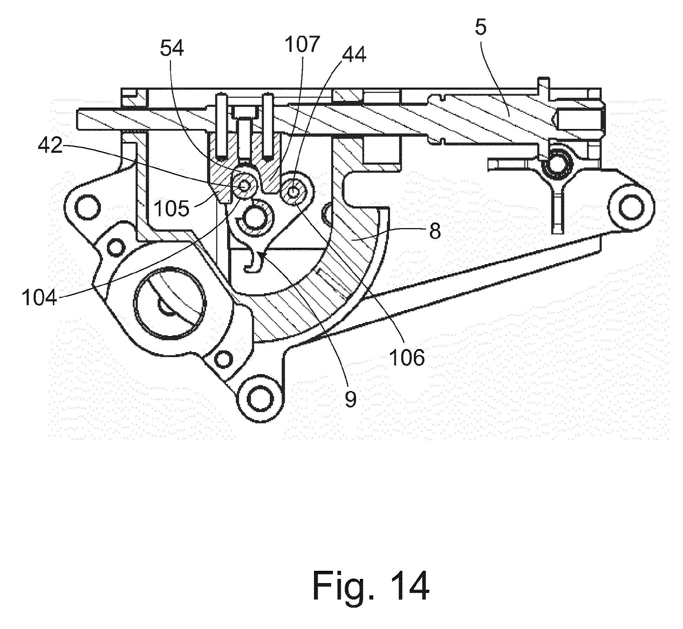

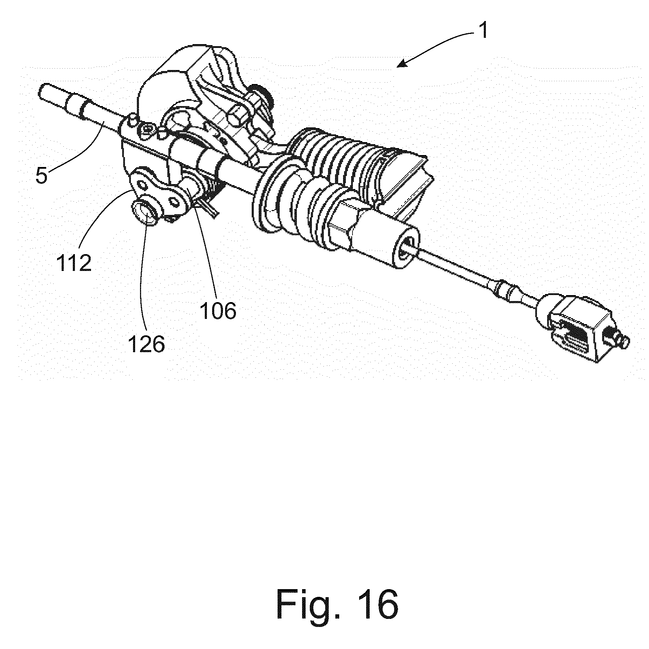

Figur 14 zeigt die Betätigungseinrichtung 1 in einer Seitenansicht. Dabei sind der Mitnehmer 9 sowie der Stößel 5 abgewandelt worden. Diese Abwandlungen sind unabhängig voneinander, insbesondere kann der Stößel 5 wie in den Figuren 14 und 16 gezeigt mit dem Mitnehmer 9 nach den vorhergehenden Figuren kombiniert werden und der Mitnehmer 9 nach den Figuren 14 bis 17 mit einem Stößel nach den vorhergehenden Figuren.

In Figur 14 sind die Rollen 104 und 106 als Ummantelung der Bolzen 42 und 44 auch zeichnerisch dargestellt. Wie bereits ausgeführt liegt eine Ummantelung der Bolzen auch in den Ausführungsformen der vorhergehenden Figuren vor, auch wenn dies zeichnerisch nicht hervorgehoben ist.

Der Stößel 5 weist zwei Finger 105 und 107 auf, die mit den Bolzen 42 und 44 in Eingriff stehen. Die genaue Anzahl ist nicht relevant, die Anzahl der Bolzen und die der Finger stimmt aber überein.

Die Rollen 104 und 106 ummanteln die Bolzen 42 und 44 und verringern so die Belastung zwischen dem Getriebe 3 und dem Stößel 5, indem die Belastung zwischen dem Getriebe 3 bzw. seinem Verbindungselement 9 und dort bei den Bolzen 42 und 44 durch die Rollen 104 und 106 aufgeteilt wird, indem die bei Kontakt mit den Bolzen 42 und 44 vorhandene Gleitreibung mittels der Rollen 104 und 106 in eine Rollreibung umgewandelt wird. Die Gleitreibung liegt dann zwischen den Bolzen 42 und 44 und der jeweiligen Rolle 104 und 106 vor. Dadurch kann aber der Verschleiß am Stößel 5 minimiert werden.

Die Rollen 104 und 106 sind aus Stahl. Die Rollen 104 und 106 können auch am Innendurchmesser auch mit Gleitlagerbuchsen versehen werden. Diese sind bevorzugt als eingepresste Glacierbuchse ausgebildet. Mit Gleitlagern kann die Gleitreibung zwischen Bolzen 42 und 44 und dem jeweiligen Mantelelement verringert werden.

Das Verbindungselement 9 umfasst ein an einer Welle des Getriebes 3 fixiertes Halteblech 110. Das Halteblech 110 hat eine herzförmige Grundform und ist an der Herzspitze an der Welle fixiert. Die Bolzen 42 und 44 sind beabstandet zur Drehachse der Welle sowie des Halteblechs 110 angeordnet.

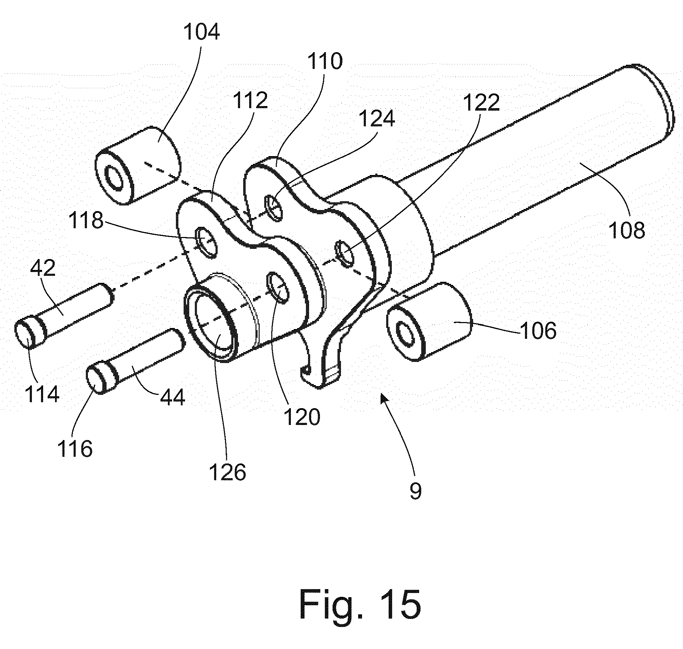

Eine alternative Ausgestaltung des Verbindungselementes 9 ist in Figur 15 gezeigt. Dabei sind zwei Haltebleche 110 und 112 an der Welle 108 fixiert. Die Haltebleche 110 und 112 sind beabstandet und stützen jeweils ein Ende der Bolzen 42 und 44. Die Bolzen 42 und 44 umfassen jeweils eine Kopf 114 und 116 als Anschlag für das Halteblech 112, also das außen liegende Halteblech. Zum Abstützen der Bolzen 42 und 44 weisen die Haltebleche 110 und 112 bevorzugt die Ausnehmungen 118, 120, 122 und 124 auf. Die Bolzen 42 und 44 können alternativ auch an den Halteblechen 110 und 112 festgeschweißt sein. So kann verhindert werden, dass der Stößel 5 als Hebel die Bolzen 42 und 44 verbiegt.

Figur 16 zeigt das Verbindungselement 9 im montierten Zustand in einer perspektivischen Ansicht. Die Bolzen 42 und 44 stehen mit den Fingern 105 und 107 in Eingriff und verschieben so den Stößel 5 linear. Das Halteblech 112 stützt die Bolzen 42 und 44 nach außen hin ab. Dabei ist das Halteblech 112 an der Herzspitze 126 an der Welle 108 befestigt.

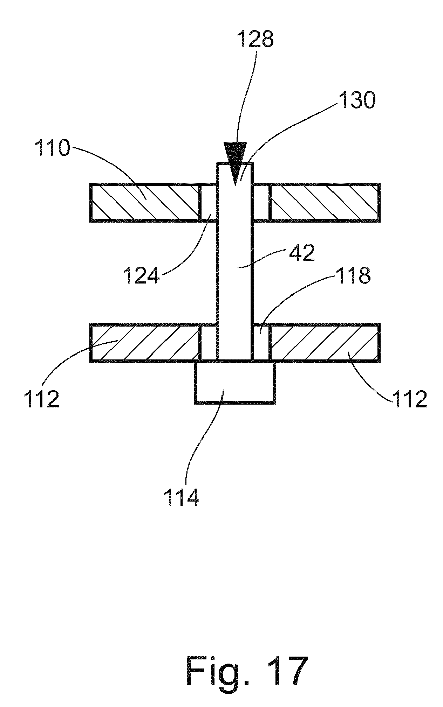

Figur 17 zeigt eine alternative Befestigungsmöglichkeit für die Bolzen 42 und 44. Dabei wird der Bolzen 42 mit einem Keil 128 am freien Ende 128 aufgetulpt. Dadurch wird das freie Ende 130 aufgeweitet, wodurch der Bolzen 42 nicht mehr durch die Öffnung 124 bewegt werden kann.

Fig. 18 zeigt einen Teil der Betätigungseinheit 1, nämlich das Getriebe 3. Das Zahnradsegment 8 ist zwar leicht unterschiedlich ausgestaltet im Vergleich zu den Figuren 1 - 8, seine Funktionsweise ist dennoch identisch. Insbesondere befindet sich der Verschließausgleichmechanismus in Form der Schlingfeder 10 und der weiteren verwendeten Teile im Getriebe 3, ist jedoch nicht sichtbar. Bezüglich der Ausgestaltung wird aber auf die obige Beschreibung verweisen. Dargestellt ist vielmehr das Vorspannelement 132 in Form einer Drehfeder 134. Die Drehfeder 134 ist also nicht identisch mit der Schlingfeder 10, vielmehr befindet sie sich ungefähr auf gleicher axialer Position, jedoch radial außerhalb der Schlingfeder 10. Die Drehfeder 134 ist auf ihrer ersten Seite 136 an der Abstützstelle 138 am Zahnradsegment 8 und damit auf der Getriebeeingangsseite bzw. Getriebeantriebsseite abgestützt. Die zweite Seite 140 ist dagegen an der Abstützstelle 142 am Kurvengetriebe 31 und damit auf der Getriebeausgangsseite oder Getriebeabtriebsseite abgestützt. Die Abstützung erfolgt dabei indirekt, genau genommen stützt sich die zweite Seite 140 der Drehfeder 134 nämlich am Lagerelement 144 ab. Dieses ist jedoch drehfest mit dem Kurvengetriebe 31 verbunden, sodass eine auf das Lagerelement 144 wirkende Kraft auch so auf das Kurvengetriebe 31 übertragen wird. Zur Verbindung des Lagerelementes 144 mit dem Kurvengetriebe 31 weist das Lagerelement 144 einen Bolzen 146 auf, der in einer Ausnehmung des Kurvengetriebes 31 eingreift. Selbstverständlich kann auch jede andere Art der Drehverbindung verwendet werden. Weiterhin weisen das Zahnradsegment 8, das Kurvengetriebe 31 und das Lagerelement 144 die gleiche Drehachse 148 auf.

Bewirkt der weiter oben beschriebene Verschleißausgleichmechanismus eine Verdrehung der Relativposition von Zahnradsegment 8 zu Kurvengetriebe 31, so erhöht dies die Vorspannkraft der Drehfeder 134 in Richtung Ausrücken.

### Bezugszeichen

- 1: Betätigungseinheit
- 2: Elektromotor
- 3: Übertragungseinheit
- 4: Kompensationsfedereinheit
- 5: Stößel
- 6: Vorlastfeder
- 7: Anschlagfeder
- 8: Zahnradsegment
- 9: Mitnehmer
- 10: Schlingfeder
- 12: Gelenklager
- 14: Federführung
- 16: Kompensationsfeder
- 18: Gehäuse
- 20: Deckel
- 22: Stirnradverzahnung
- 24: Drehachse
- 26: Anschlag
- 28: Anschlag
- 30: Lagerbolzen
- 31: Kurvengetriebe
- 32: Ringwandung
- 34: seitliches Ende
- 36: seitliches Ende
- 37: Nut
- 38: Grundkörper
- 40: Ausnehmung
- 42: Antriebsbolzen
- 44: Antriebsbolzen
- 46: Lagerabschnitt
- 48: Lagerabschnitt
- 50: Mittelabschnitt
- 52: Ausnehmung
- 54: Ausnehmung
- 56: Ausnehmung
- 58: Versteifungsabschnitt
- 60: Markierung
- 62: Pfeil
- 64: Achse
- 66: Achse
- 68: Linie
- 70: Linie
- 72: Linie
- 74: Linie
- 76: Linie
- 78: Linie
- 80: Linie
- 82: Linie
- 84: Achse
- 86: Linie
- 88: Linie
- 90: Linie
- 92: Linie
- 94: Achse
- 96: Linie
- 98: Linie
- 100: Abstand
- 102: Abstand
- 104: Rolle
- 105: Finger
- 106: Rolle
- 107: Finger
- 108: Welle
- 110: Halteblech
- 112: Halteblech
- 114: Kopf
- 116: Kopf
- 118: Ausnehmung
- 120: Ausnehmung
- 122: Ausnehmung
- 124: Ausnehmung
- 126: Herzspitze
- 128: Keil
- 130: freies Ende
- 132: Vorspannelement
- 134: Drehfeder
- 136: erste Seite
- 138: Abstützstelle
- 140: zweite Seite
- 142: Abstützstelle
- 144: Lagerelement
- 146: Verbindung
- 148: Drehachse

## Patentansprüche

1. Betätigungseinheit (1) für eine Kupplung umfassend eine Antriebseinheit (2), ein Betätigungselement (5) zum Betätigen der Kupplung und ein Getriebe (3) zum Übersetzen eines durch die Antriebseinheit (2) erzeugten Drehmomentes auf das Betätigungselement (5), wobei das Betätigungselement (5) mit einem Vorspannelement (132) in Richtung Ausrücken zumindest zeitweise vorspannbar ist, **dadurch gekennzeichnet, dass** das Vorspannelement (132) auf einer Seite (136) am Getriebe abgestützt ist.

2. Betätigungseinheit nach Anspruch 1, **dadurch gekennzeichnet, dass** das Vorspannelement als Drehfeder (134) ausgebildet ist.

3. Betätigungseinheit nach Anspruch 1 oder 2, **dadurch gekennzeichnet, dass** das Vorspannelement (132) an einem Lagerelement (144) am Getriebe (3) gelagert ist.

4. Betätigungseinheit nach einem der vorangehenden Ansprüche, **dadurch gekennzeichnet, dass** das Vorspannelement (132) auf einer zylindrischen Rolle gelagert ist.

5. Betätigungseinheit nach einem der vorangehenden Ansprüche, **dadurch gekennzeichnet, dass** am Getriebeausgang ein Kurvengetriebe (31) angeordnet ist und das Vorspannelement (132) an einem mit dem Kurvengetriebe (31) fest verbundenen Lagerelement (144) gelagert ist.

6. Betätigungseinheit nach einem der vorangehenden Ansprüche, **dadurch gekennzeichnet, dass** das Lagerelement (144) des Vorspannelementes drehbar am Getriebe (3) befestigt ist.

7. Betätigungseinheit nach einem der vorangehenden Ansprüche, **dadurch gekennzeichnet, dass** das Lagerelement (144) des Vorspannelementes (132) an einem Zahnradsegment (8) befestigt ist.

8. Betätigungseinheit nach einem der Ansprüche 3 bis 7, **dadurch gekennzeichnet, dass** das Lagerelement (144) als Hülse ausgebildet ist.

9. Betätigungseinheit nach einem der vorangehenden Ansprüche, **dadurch gekennzeichnet, dass** das Vorspannelement (132) auf der zweiten Seite (140) zumindest zeitweise am Getriebe (3) abgestützt ist.

10. Betätigungseinheit nach Anspruch 9, **dadurch gekennzeichnet, dass** das Vorspannelement (132) am Getriebeausgang abgestützt ist.

11. Betätigungseinheit nach einem der vorangehenden Ansprüche, **dadurch gekennzeichnet, dass** das Getriebe (3) einen Anschlag aufweist, gegen den die zweite Seite (140) des Vorspannelementes (132) bei Bewegung des Getriebes (3) in Richtung Einrücken läuft, sodass das Vorspannelement (132) nicht mehr auf die Abstützstelle der zweiten Seite (140) am Getriebe (3) wirkt.

12. Betätigungseinheit nach einem der vorangehenden Ansprüche, **dadurch gekennzeichnet, dass** das Getriebe (3) einen Verschleißausgleichsmechanismus aufweist.

13. Betätigungseinheit nach Anspruch 12, **dadurch gekennzeichnet, dass** das Vorspannelement so angeordnet ist, dass bei zunehmendem Verschleiß die Vorspannkraft des Vorspannelementes (132) erhöht ist.

14. Kraftfahrzeug mit einer Betätigungseinheit, **dadurch gekennzeichnet, dass** die Betätigungseinheit nach einem der vorangehenden Ansprüche ausgebildet ist.
